# EUROPEAN PATENT APPLICATION

(11) **EP 0 886 342 A1**
(43) Date of publication of application: **23.12.1998**
(21) Application number: 97401366.6
(22) Date of filing: 16.06.1997
(51) Int. Cl.: H01R 4/70, H02G 1/14, H02G 15/196

(54) **Cable joint**

(71) Applicant: ALCATEL ALSTHOM COMPAGNIE GENERALE D'ELECTRICITE, 75008 Paris (FR)
(72) Inventor: Varreng, Jan Sverre, 1067 Oslo (NO)
(74) Representative: Mende, Eberhard, Dipl.-Ing.

(57) **Abstract**

The present invention relates to a method for making a joint between two polymer insulated power cables (3,4), including the steps of removing the inner semiconductor and the insulation from the two cable ends, jointing the two conductors, rebuilding the inner semiconductor (5) and insulation (6) by winding polymer tapes over the joint and providing heat and pressure to crosslink the wound polymer layers. The method includes placing a tight hose (8) over the rebuilt insulation, vacuumizing the voids of the wound layers (6) before and during the crosslinking process by means of a vacuum pump (10) connected to a porous ventilating layer (7) arranged underneath the tight hose (8).

## Description

The present invention relates to a method for making a joint between two polymer insulated power cables, including the steps of removing the inner semiconductor and the insulation from the two cable ends, jointing the two conductors, rebuilding the inner semiconductor and insulation by winding polymer tapes over the joint and providing heat and pressure to crosslink the wound polymer layers.

A technical problem is to avoid gas filled voids in cable joints where the polymer insulation is rebuilt with wound polymer tapes. With wound insulation there will always be voids where tape layers overlap and cross each other.

One solution is outlined in NO 147815 (J Varreng 2-1) where gas produced in a polymer joint during the crosslinking process can escape from the joint to the environment.

Another solution is known from NO 154650 (G Koumas 2) where gas produced in the joint can escape into the conductor through perforations in the inner semiconductor.

These solutions have been used, - but does not solve all the problems. The object of the present invention is to improve the jointing and crosslinking technique for tape wound polymer joints. The main features of the invention are defined in the claims.

The basic idea of the invention is to vacuumize the joint before and during the crosslinking process. A porous ventilating tape of e.g. fibrous material such as glasfiber, plastic or carbon fiber is arranged over the wound polymer tape joint and covered with a tight hose. A vacuum pump is connected to the space provided underneath the hose. Vacuumization is possible until the crosslinking temperature reaches some 160 degrees C. Experiments have proven good results. Vacuumization as low as 600 millibar has been obtained.

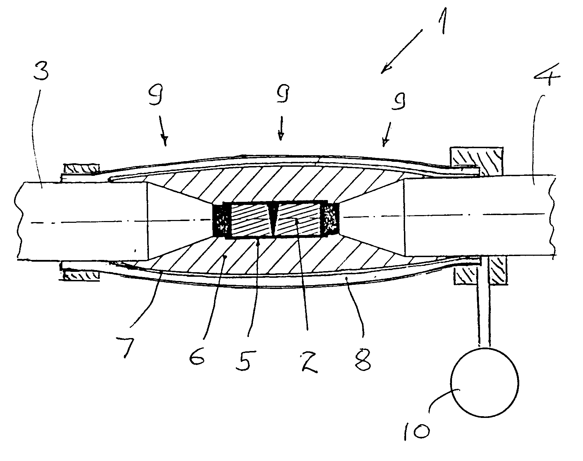

Above mentioned and other features and objects of the present invention will clearly appear from the following detailed description of embodiments of the invention taken in conjunction with the drawing.

The drawing schematically illustrates a wound polymer tape joint 1 including a joint 2 between two conductors 3 and 4, a rebuilt inner semiconductor 5, layers of wound insulating polymer tape 6 as well as a ventilating tape layer 7 and a tight hose 8 placed over the wound joint insulation. Crosslinking of the inner semiconductor 5 and of the wound insulation layers 6 will be obtained by applying heat and pressure as indicated with arrows 9. The space provided by the ventilating layer 7 is connected to a vacuum pump 10. Evacuation or vacuumization should start with the cold wound joint and continue until the outer layers of the wound insulation are melted. When the temperature of the joint reaches some 160 °C the voids in the wound insulation layers will be closed due to melting caused by the crosslinking heat applied.

The above detailed description of embodiments of this invention must be taken as examples only and should not be considered as limitations on the scope of protection.

## Claims

1. Method for making a joint between two polymer insulated power cables (3,4), including the steps of removing the inner semiconductor and the insulation from the two cable ends, jointing the two conductors, rebuilding the inner semiconductor (5) and insulation (6) by winding polymer tapes over the joint and providing heat and pressure to crosslink the wound polymer layers,
**characterized by** placing a tight hose (8) over the rebuilt insulation, vacuumizing the voids of the wound layers (6) before and during the crosslinking process by means of a vacuum pump (10) connected to a porous ventilating layer (7) arranged underneath the tight hose (8).

2. Method according to claim 1,
**characterized by**
providing a porous ventilating tape (7) of fibrous material such as glasfiber, plastic or carbon fiber over the wound polymer tape joint underneath the tight hose.
